# EUROPEAN PATENT SPECIFICATION

(11) **EP 4 312 487 B1**
(45) Date of publication and mention of the grant of the patent: **19.02.2025**
(21) Application number: 22718774.7
(22) Date of filing: 04.03.2022
(51) Int. Cl.: A01B 49/06, A01B 63/00, A01C 5/06

(54) **WORKING SECTION OF AN AGRICULTURAL TILLING SET**
ARBEITSABSCHNITT EINES LANDWIRTSCHAFTLICHEN BODENBEARBEITUNGSSATZES
SECTION DE TRAVAIL D'UN ENSEMBLE AGRICOLE DE TRAVAIL DU SOL

(30) Priority: 30.03.2021 PL 12996121 U
(43) Date of publication of application: 07.02.2024
(73) Proprietor: Czajkowski Maszyny Sp. z o.o., 87-400 Golub-Dobrzyn (PL)
(72) Inventor: CZAJKOWSKI, Maciej, 87-400 Golub-Dobrzyn (PL)
(74) Representative: Wroblewski, Marcin Jan
(86) International application number: PCT/IB2022/051926
(87) International publication number: WO 2022/208185

(56) References cited:
- WO-A1-2016/048167
- US-A1- 2011 088 603
- US-A1- 2020 323 124

## Description

The subject of the invention is a working section of an agricultural tilling set, which is used in agriculture for tillage, especially in the system of a strip tillage.

In the state of the art, there is known the strip tillage that involves cultivating narrow strips of the field surface in which seeds are sown after earlier simultaneous, deep loosening of these strips of the field as well as ploughing elimination. This system limits the number of passes of cultivating machines across the field and uses complex tilling sets, with the use of which agrotechnical activities may be reduced to a single pass of the cultivating machine.

US5333694 discloses a strip tillage seed preparation device having a tractorcoupled toolbar and seeding sections connected thereto. Single seeding sections can be individually set on the toolbar so that it is possible to adjust their height and the horizontal distance between individual sections. Each seeding section has a main frame connected with the toolbar by bolts and fixing lugs. The main frame is also swingably mounted on the chassis frame that fixes a pair of depth wheels equipped with flat coulter discs, which during operation make a groove in the upper surface of the soil. The main frame also has an attached loosening tine, cutting the soil at a great depth and having a blade that cuts the soil vertically, and a chisel attached to the bottom of the sword that cuts the soil horizontally. The loosening tine is attached to the main frame by biasing and tensioning mechanisms having coil springs. In the tensioning mechanism, the coil spring is designed to keep the loosening tine in the working position. Moreover, corrugated coulter discs for grinding and crushing the soil are slidably mounted on the main frame in the area behind the loosening tine. Additionally, directly behind the loosening tine, on the back of the blade, the outlet end of the fertilizer dosing tube can be attached. In the direction of the movement of the seed preparation machine, first the flat coulter discs, then the loosening tine, and then the corrugated coulter discs pass through the soil. The individual tools are mounted in the indicated order on the main frame in planes parallel to each other.

On the other hand, the Polish patent PL231360 discloses a strip tilling device containing a frame to which the splitting and tearing discs are connected, a disc coulter, a star-shaped grader, a loosening tine with a fertilizer coulter, cultivating firming discs and a compacting and levelling roller. In this device, the splitting and tearing discs are attached to the frame with the use of a shock absorber and an articulated joint. The purpose of the splitting and tearing discs is to uncover the soil by splitting and tearing the mulch. The pairs of splitting and tearing discs are fixed on a common bracket and inclined to each other so that their lower edges are in the immediate vicinity and their upper edges are spaced apart. Behind each pair of splitting and tearing discs, a disc coulter in the form of a circle is connected with the frame and has a cutting edge with embossing, leaving a trace in the soil in the shape of a wave in the top view. The disc coulter cuts mulch residues and cuts the soil 5 - 15 cm deep. A star-shaped grader is mounted on the frame behind the disc coulter. The purpose of using the star-shaped grader is to further clean the soil strip. Another tool mounted on the frame is a loosening tine cutting the soil to a depth of 35 cm. The loosening tine is connected with the frame with the use of a double-acting actuator which enables the loosening arm to be raised and protects against stones present in the soil. The loosening tine has a blade that cuts the soil vertically and a chisel attached to the bottom of the blade that cuts the soil horizontally. Moreover, a fertilizer coulter is attached to the rear part of the loosening tine. On the frame, behind the loosening arm with the fertilizer coulter, pairs of cultivating firming discs are mounted, which, in pairs, are arranged divergently to each other. The distance between the edges of the discs at the front is greater than the distance between the edges of the discs at the rear. Thus, the discs close the gap resulting from the action of the loosening tine. The cultivating firming discs are mounted on movable supports with locks, thanks to which their position can be adjusted vertically, horizontally as well as the distance between them can be adjusted. The last element of the strip tilling device is a roller that compacts and levels the soil, as well as eliminates air pockets.

The aim of the invention is to develop a construction of the working section of an agricultural tilling set, the production costs of which will be reduced while maintaining full functionality. An additional goal is to reduce the weight of the working section, which will largely translate into lowering the weight of the tilling set.

The invention relates to a working section of an agricultural tilling set, comprising working tools mounted on a supporting frame, in particular a pair of inclined relative to each other splitting and tearing discs, a disc coulter, a loosening tine with a fertilizer coulter, a pair of cultivating firming discs, wherein on the front part of the supporting frame there is a pair of splitting and tearing discs mounted on a common body which are connected by a shock absorber to the supporting frame, and behind this pair of splitting and tearing discs other working tools are mounted, and the loosening tine is rotatably mounted in relation to the supporting frame, which is provided with means for connecting with the agricultural tilling set. The essence of the invention is in that in the part of the supporting frame behind the disc coulter, there is mounted a bracket of loosening tine , in which the loosening tine is rotatably mounted and on which a pair of monolithic brackets of the actuator is attached, in which the actuator connected with the loosening tine is mounted. Whereas, each cultivating firming disc is connected to the supporting frame by an angular bracket.

Preferably, a beam which has angular brackets of the cultivating firming discs fastened, with shock-absorbing elements, in particular made of rubber or plastics, located between the beam and the angular brackets is embedded in the loosening tine bracket.

It is also desirable when, on the common body of the splitting and tearing discs, the cleaning scrapers associated with each splitting and tearing disc are slidably mounted.

It is good if the working section has splitting and tearing discs or cultivating firming discs and the front edges of the splitting and tearing discs or cultivating firming discs are shifted relative to each other on a straight line parallel to the direction of the working section's movement.

It is appropriate for the shock absorber, which fastens the common body of the splitting and tearing discs, to have a shank with through holes and a coil spring mounted on it, wherein coil spring rests on the lower retaining clamp with a through hole, and the securing pin with a hole for a locking pin passes through the through holes of the shock absorber shank and lower retaining clamp.

It is also advantageous if the holder with a fertilizer distributor is connected to the loosening tine bracket.

It is good when cleaning scrapers are attached to the splitting and tearing discs and to the disc coulter.

It is especially appropriate when the supporting frame comprises a reinforcing support.

The main advantage of the invention, achieved by the use of a single-piece loosening tine bracket, monolithic actuator brackets, as well as angular brackets for the cultivating firming discs, is the simplification of the production process and elimination of additional production activities, so far necessary when using actuator supports consisting of several parts and when using adjustable cultivating firming disc arms. This translates into a reduction in the production costs while maintaining the full functionality of the working section. The use of the actuator and the loosening tine bracket allows the loosening tine to be folded, which is necessary when driving on roads. Additional advantages are achieved by considering the preferred features of the invention. In particular, the use of shock-absorbing elements between the beam and the angular brackets results in a significant reduction of vibrations and improvement of the comfort of the work of the tilling set with the working section. The improvement of the operation of the tilling set is also influenced by the use of cleaning scrapers assigned to the splitting and tearing discs, as well as the displacement of the splitting and tearing and firming discs relative to each other, as well as the use of subsequent cleaning scrapers. As a result, the individual working tools are cleaned of soil and plant residues. The shock absorber that fastens the common body of the splitting and tearing discs allows to adjust their contact force and actively follow the terrain, ensuring that the working parameters of the tilling set are maintained. On the other hand, thanks to the use of a reinforcing beam, the mounting of working sections to the agricultural tilling set is simplified.

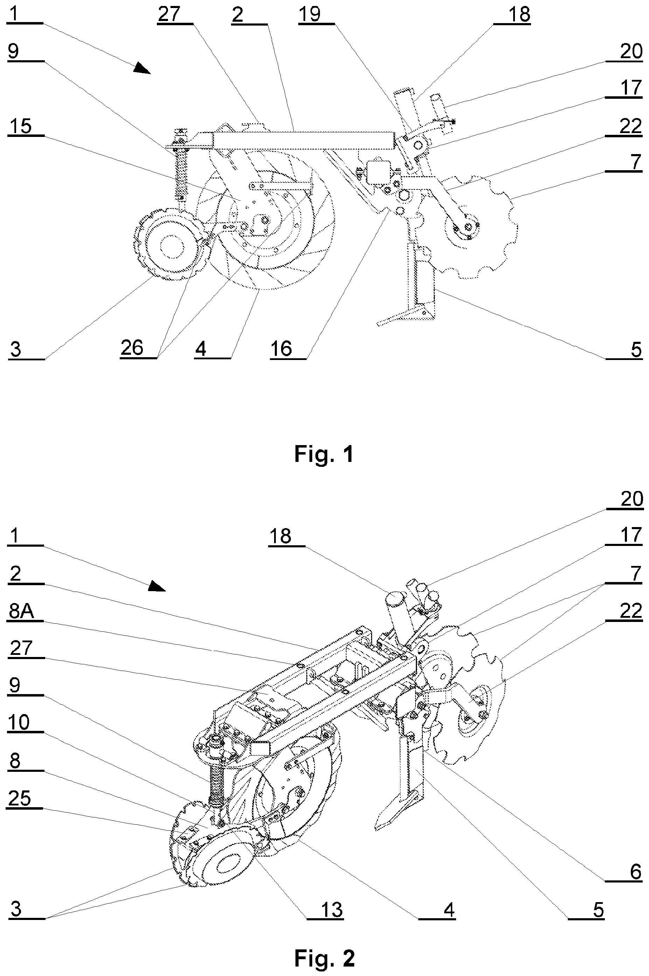

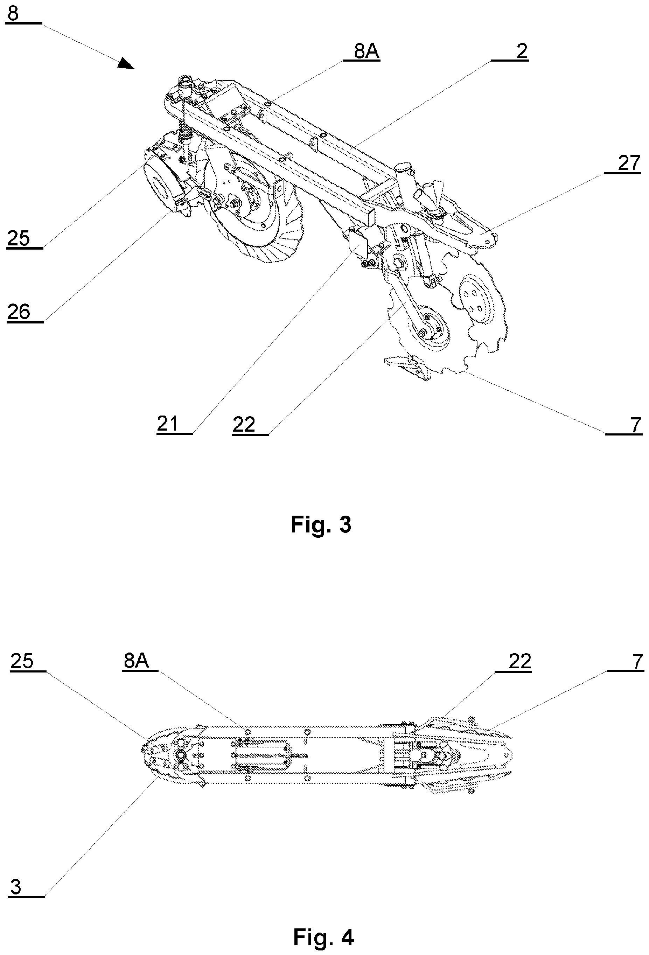

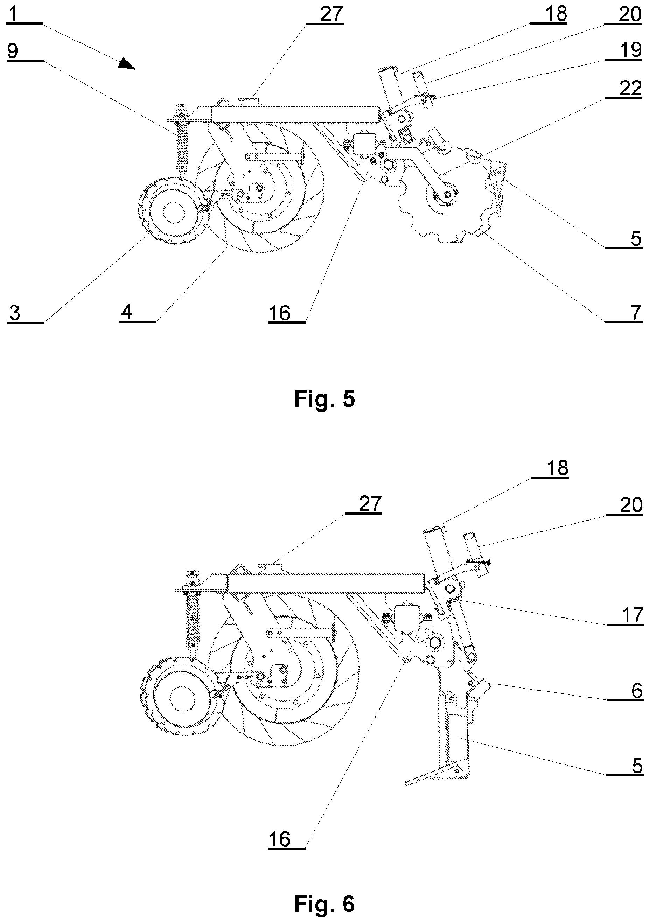

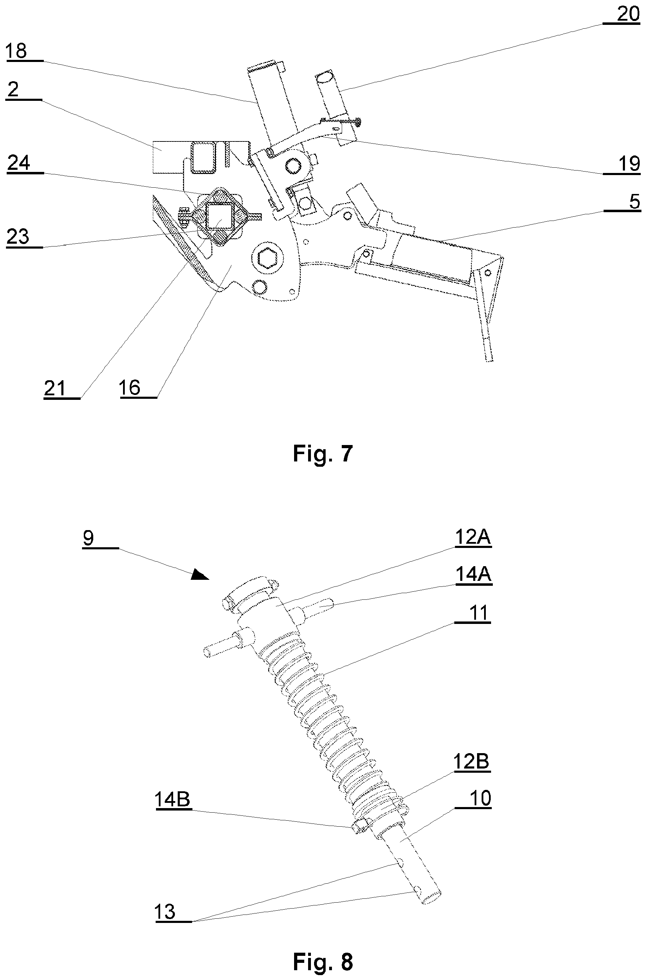

The invention has been illustrated in exemplary embodiments and in the drawing, in which fig. 1 presents the working section of an agricultural tilling set in a side view, fig. 2 - a working section in a perspective view, fig. 3 - a working section with an elongated supporting frame in a perspective view, fig. 4 - the working section as in fig. 3 in top view, fig. 5 - the working section in a side view with the splitting and tearing discs and cultivation firming discs offset from each other, fig. 6 - the working section in a side view showing the loosening tine bracket, fig. 7 - working section with raised loosening tine in partial side view of the loosening tine bracket and in partially cross-section through the beam, fig. 8 - shock absorber of splitting and tearing discs in perspective view.

The working section 1 of the agricultural tilling set includes working tools mounted on the supporting frame 2, in the form of a pair of inclined relative to each other splitting and tearing discs 3, a disc coulter 4 with embossing, a loosening tine 5 with a fertilizer coulter 6 and a pair of cultivating firming discs 7. Working sections 1 are intended for agricultural cultivators for strip tillage and soil strip preparation for seeding. The working sections 1 may have a short (Figs. 1, 2) or long (Figs. 3, 4) supporting frame 2 constituting the part to which all other elements and working tools of the working section 1 are attached. All elements and working tools attached to the supporting frame 2 are the same regardless of its length. While, the difference in the length of the supporting frame 2 allows for the displacement between the individual working tools in adjacent working sections after mounting on the agricultural tilling set. During the passage of the agricultural tilling set with mounted working sections 1, the soil strip is tilled with working tools in the sequence from the splitting and tearing discs 3 to the cultivating firming discs 7. The supporting frame 2 is provided with means for connecting to the agricultural tilling set. For mounting the working sections 1 on the agricultural tilling set, there are used mounting holes 8A made in the supporting frame 2. Appropriate means for connecting to the agricultural tilling set are fastened in the mounting holes 8A, and these may be, for example, clamping yokes or clamps. The pair of inclined relative to each other splitting and tearing discs 3 have a common body 8, which is connected by a shock absorber 9 with the supporting frame 2. The splitting and tearing discs 3 are mounted in the front part of the working section 1, and their task is to clean the soil strip.

The shock absorber 9 (fig. 8) has a shank 10 with a coil spring 11 mounted thereon, resting on the one side of the upper retaining clamp 12A and, on the other side, the lower retaining clamp 12B. The shank 10 is fixed from the top of the supporting frame 2 through the upper retaining clamp 12A with the mounting arms 14A entering into the open-top socket in the supporting frame 2. The shank 10 has through holes 13 along its length for adjusting the contact force of the splitting and tearing discs. For this purpose, the lower retaining clamp 12B has a through hole, so that a locking pin 14 with a hole for securing pin extends through selected through holes 13 of the shank 10 of the shock absorber 9 and the through hole of lower retaining clamp 12B. Thus, by appropriately adjusted lower retaining clamp 12B, it is possible to regulate the contact force of the splitting and tearing discs 3 and adapt contact force to the conditions in which the agricultural tilling set is used. This translates into active following of the terrain, ensuring the maintenance of the working parameters of the agricultural tilling set.

In the next stage of work of the working section 1, after the initial spreading of the remains of the vegetation and the uncovering of the soil strip, the soil layer is cut up to 100 mm through the disc coulter 4 with embossing. The disc coulter 4 is connected to the supporting frame 2 with a bracket 15. The disc coulter 4 itself has the form of a rim with a corrugated cutting edge, which increases the scope of work in the lateral direction, and the incision formed in the soil in the top view has a wave-like shape. In addition, the corrugations on the cutting edge improve the resistance of the disc coulter 4 to deformations.

In the part of the supporting frame 2, behind the disc coulter 4, a bracket 16 of loosening tine 5 is mounted. Preferably, the supporting frame 2 and bracket 16 of loosening tine 5 are connected to each other in a non-detachable manner, for example by welding. In the bracket 16 of the loosening tine 5, a loosening tine 5 is rotatably mounted with a fertilizer coulter 6 attached to it in the rear part. The loosening tine 5 has replaceable working elements, and its task is to deeply loosen the cultivated soil, down to a depth of 350 mm. Moreover, a pair of monolithic brackets 17 is mounted on the bracket 16 of the loosening tine 5, between which a hydraulic actuator 18 is mounted, connected to the loosening tine 5. The position of the loosening tine 5 is controlled with the use of the hydraulic actuator 18. With the hydraulic actuator 18 piston rod extended, the loosening tine 5 is unfolded and is in the working position, while with the piston rod of the hydraulic actuator 18 retracted, the loosening arm is folded and it is in the transport position. Moreover, the use of a hydraulic actuator 18 protects the loosening tine 5 against overload. Additionally, the holder 19 with the mounted fertilizer distributor 20 is connected to the bracket 16 of the loosening arm 5. The fertilizer distributor 20 has three inlet openings for the connection of the fertilizer supply lines and an outlet for connection of the supply line connecting the fertilizer distributor 20 with the fertilizer coulter 6. One of the inlet holes of the fertilizer distributor 20 has a venting function, whereby fertilizer supply lines can be connected to the two inlets. The fertilizer coulter 6, on the other hand, has an inlet for connecting a supply line from the fertilizer distributor, and the outlet of the fertilizer coulter 6 is designed to supply fertilizer to the soil, so that the fertilizer can be introduced along the entire cross-section of the cultivated strip. The fertilizer distributor 20 can supply different types of fertilizer to the fertilizer coulter 6, and even liquid fertilizer such as liquid manure or seeds. Two separate fertilizer tanks on the agricultural tilling set may be connected to the fertilizer distributor 20. A fertilizer coulter 6 connected to a fertilizer distributor 20 performs the task of evacuating air from the loosened soil.

Behind the loosening tine 5, with the supporting frame 2, also by means of the loosening tine 5 of bracket 16, there are connected the cultivating firming discs 7, which are divergent to each other. The task of the cultivating firming discs 7 is to close the gap formed by the loosening tine 5. A beam 21 with a square cross-section is embedded in the bracket 16 of the loosening tine 5. Each cultivating firming disc 7 is connected to the supporting frame 2 by means of the angular bracket 22 and by means of the bracket 16 of the loosening tine 5 and the beam 21. Each angular bracket 22 has a cultivating firming disc 7 attached at one end, and at the other end it is connected to a fixing clamp 23 mounted on the beam 21. The fixing clamp 23 can be appropriately adapted to the beam 21 without having to change the entire angular bracket 22. Between the beam 21 and the fixing clamps 23 of the angular brackets 22 there are placed four rubber shock absorbing elements 24 with a circular cross section. The fixing clamp 23 fully rests on the shock absorbing elements 24, which significantly reduces the vibrations transmitted from the cultivating firming discs 7 to the working section 1. In other embodiments, the shock-absorbing elements 24 may be made of plastics.

The front edges of the splitting and tearing discs 3 are shifted relative to each other on a straight line parallel to the direction of movement of the working section 1. So arranged, the splitting and tearing discs 3 are automatically cleaned of soil and plant residues.

In the working section 1, it is also possible to arrange shifted mounting of the cultivating firming discs 7 (Fig. 5). Then, the front edges of the cultivating firming discs 7 are shifted relative to each other on a straight line parallel to the direction of movement of the working section 1. It is also possible to mount the cultivating firming discs 7 without shifting, where the front edges of the cultivating firming discs 7 are located on a one straight line parallel to the direction of movement of the working section 1.

In order to ensure the best possible cleaning of soil and plant residues from the working tools, two cleaning scrapers 25 are slidably mounted on the common body 8 of splitting and tearing discs 3. Each splitting and tearing disc 3 has an assigned cleaning scraper 25. Sliding mounting of the cleaning scraper 25 provides the possibility of easy adjustment of its position in relation to the splitting and tearing disc 3.

Moreover, the cleaning of the working tools is also improved by cleaning scrapers 26 mounted on the holders connected to the bracket 15 of the disc coulter 4. Cleaning scrapers 26 clean the rim of the disc coulter 4 and the rolling surfaces of the splitting and tearing discs 3.

In the upper part of the supporting frame 2 there is an additional support 27 which supports the fixing of the working section 1 to the agricultural tilling set. The place of its fastening depends on the length of the supporting frame 2 - in case of a short supporting frame 2, the support 27 is mounted in the area above the disc coulter 4, and in case of a long supporting frame 2, the support 27 is located behind the fertilizer distributor 20.

## Claims

1. A working section (1) of an agricultural tilling set, comprising working tools mounted on the supporting frame (2), in particular a pair of inclined relative to each other splitting and tearing discs (3), a disc coulter (4), a loosening tine (5) with a fertilizer coulter (6), a pair of cultivating firming discs (7), wherein on the front part of the supporting frame (2) there is the pair of splitting and tearing discs (3) mounted on the common body (8) which is connected by a shock absorber (9) to the supporting frame, and behind this pair of splitting and tearing discs (3) other working tools are mounted, and the loosening tine (5) is rotatably mounted in relation to the supporting frame, which is provided with means for connecting to the agricultural tilling set, wherein in the part of the supporting frame (2) behind the disc coulter (4) there is mounted a bracket (16) of the loosening tine (5), in which the loosening tine (5) is rotatably mounted and on which a pair of monolithic brackets (17) of an actuator (18) is attached, in which the actuator (18) connected with the loosening tine (5) is mounted, and each cultivating firming disc (7) is connected to the supporting frame (2) by an angular bracket (22).

2. The working section according to claim 1, **characterized by** a beam (21) which has angular brackets (22) of the cultivating firming discs (7) fastened, with shock-absorbing elements (24), in particular made of rubber or plastics, located between the beam (21) and the angular brackets (22), is embedded in the loosening tine (5) bracket (16).

3. The working section according to claim 1 or 2, **characterized in that** on the common body (8) of the splitting and tearing discs (3) cleaning scrapers (25) associated with each splitting and tearing disc (3) are slidably mounted.

4. The working section according to one of the claims from 1 to 3, **characterized in that** the front edges of the splitting and tearing discs (3) or cultivating firming discs (7) are shifted relative to each other on a straight line parallel to the direction of movement of the working section (1).

5. The working section according to one of the claims from 1 to 4, **characterized in that** the shock absorber (9) fastening the common body (8) of the splitting and tearing discs (3) has a shank (10) with through holes (13) and a coil spring (11) mounted on it, wherein the coil spring rests on a lower retaining clamp (12B) with a through hole, and a securing pin (14) with a hole for a locking pin passes through the holes (13) of the shock absorber (9) shank (10) and the lower retaining clamp (12B).

6. The working section according to one of the claims from 1 to 5, **characterized in that** a holder (19) with a fertilizer distributor (20) is connected to the loosening tine bracket (16).

7. The working section according to one of the claims from 1 to 6, **characterized in that** cleaning scrapers (26) are attached to the splitting and tearing discs (3) and to the disc coulter (4).

8. The working section according to one of the claims 1 to 7, **characterized in that** the supporting frame (2) comprises a reinforcing support (27).

## Patentansprüche

1. Die Arbeitseinheit (1) eines landwirtschaftlichen Bodenbearbeitungsgeräts, das Arbeitswerkzeuge umfasst, die an einem Tragrahmen (2) montiert sind, insbesondere ein Paar zueinander geneigte Spalt- und Schneidscheiben (3), eine Scheibenschar (4), eine Lockerungszinke (5) mit einem Düngerschar (6), ein Paar Kultivierungs- und Verdichtungsscheiben (7), wobei an der Vorderseite des Tragrahmens (2) das Paar Spalt- und Schneidscheiben (3) an einem gemeinsamen Körper (8) montiert ist, der über einen Stoßdämpfer (9) mit dem Tragrahmen verbunden ist, und hinter diesem Paar von Spalt- und Schneidscheiben (3) weitere Arbeitswerkzeuge angebracht sind, wobei die Lockerungszinke (5) drehbar in Bezug auf den Tragrahmen montiert ist, der mit Mitteln zum Verbinden mit dem landwirtschaftlichen Bodenbearbeitungsgerät ausgestattet ist, wobei im Bereich des Tragrahmens (2) hinter dem Scheibenschar (4) eine Halterung (16) der Lockerungszinke (5) angebracht ist, in der die Lockerungszinke (5) drehbar gelagert ist und an der ein Paar monolithischer Halterungen (17) eines Betätigungselements (18) befestigt ist, in dem das Betätigungselement (18), das mit der Lockerungszinke (5) verbunden ist, angebracht ist, und jede Kultivierungs- und Verdichtungsscheibe (7) über einen Winkelhalter (22) mit dem Tragrahmen (2) verbunden ist.

2. Die Arbeitseinheit nach Anspruch 1, **dadurch gekennzeichnet, dass** ein Träger (21), an dem die Winkelhalter (22) der Kultivierungs- und Verdichtungsscheiben (7) befestigt sind, mit stoßdämpfenden Elementen (24), insbesondere aus Gummi oder Kunststoff, die sich zwischen dem Träger (21) und den Winkelhaltern (22) befinden, in der Halterung (16) der Lockerungszinke (5) eingebettet ist.

3. Die Arbeitseinheit nach Anspruch 1 oder 2, **dadurch gekennzeichnet, dass** an dem gemeinsamen Körper (8) der Spalt- und Schneidscheiben (3) verschiebbar montierte Reinigungsschaber (25) angebracht sind, wobei jeder davon jeweils einer der Spalt- und Schneidscheiben (3) zugeordnet ist.

4. Die Arbeitseinheit nach einem der Ansprüche 1 bis 3 ist **dadurch gekennzeichnet, dass** die Vorderkanten der Spalt- und Schneidscheiben (3) oder der Kultivierungs- und Verdichtungsscheiben (7) relativ zueinander auf einer Linie parallel zur Bewegungsrichtung der Arbeitseinheit (1) verschoben sind.

5. Die Arbeitseinheit nach einem der Ansprüche 1 bis 4, **dadurch gekennzeichnet, dass** der Stoßdämpfer (9), der den gemeinsamen Körper (8) der Spalt- und Schneidscheiben (3) befestigt, einen Schaft (10) mit Durchgangsbohrungen (13) und eine darauf montierte Schraubenfeder (11) aufweist, wobei die Schraubenfeder auf einer unteren Halteklemme (12B) mit einer Durchgangsbohrung ruht, und ein Sicherungsbolzen (14) mit einer Bohrung für einen Splint durch die Bohrungen (13) des Schafts (10) des Stoßdämpfers (9) und die untere Halteklemme (12B) geführt ist.

6. Die Arbeitseinheit nach einem der Ansprüche 1 bis 5, **dadurch gekennzeichnet, dass** ein Halter (19) mit einem Düngerverteiler (20) an der Halterung (16) der Lockerungszinke (5) befestigt ist.

7. Die Arbeitseinheit nach einem der Ansprüche 1 bis 6, **dadurch gekennzeichnet, dass** Reinigungsschaber (26) sowohl an den Spalt- und Schneidscheiben (3) als auch an der Scheibenschar (4) angebracht sind.

8. Die Arbeitseinheit nach einem der Ansprüche 1 bis 7, **dadurch gekennzeichnet, dass** der Tragrahmen (2) eine Verstärkungsstütze (27) umfasst.

## Revendications

1. Une section fonctionnelle (1) d'un ensemble pour labourage agricole, comprenant des outils de travail installés sur le cadrede support (2), en particulier une paire de disques de fendage et d'arrachage inclinés l'un par rapport à l'autre (3), un soc à disques (4), une dent d'ameublissement (5) avec un soc à engrais (6), une paire de disques d'affermissement de culture (7), dans lequel la paire de disques de fendage et d'arrachage (3) est montée sur la partie avant du châssis de support (2), sur le bloc commun (8) qui est relié par un amortisseur (9) au châssis de support, et derrière cette paire de disques de fendage et d'arrachage (3), d'autres outils de travail sont montés, et la dent d'ameublissement (5) est montée rotative par rapport au cadre de support, qui est pourvu de moyens de connexion à l'ensemble de labourage agricole, dans lequel un support (16) de la dent d'ameublissement (5) est monté dans la partie du cadre de support (2) située derrière le soc à disques (4), dans laquelle la dent d'ameublissement (5) est montée rotative et sur laquelle est fixée une paire de supports monolithiques (17) d'un actionneur (18), dans lequel est monté l'actionneur (18) relié à la dent d'ameublissement (5), et chaque disque de raffermissement de culture (7) est relié au châssis de support (2) par un support angulaire (22).

2. La section fonctionnelle en accord avec la revendication1, **caractérisée en ce que** une poutre (21) sur laquelle sont fixés les supports angulaires (22) des disques d'ameublement (7), avec des éléments amortisseurs (24), notamment en caoutchouc ou en plastique, situés entre la poutre (21) et les supports angulaires (22), est encastrée dans le support (16) de la dent d'ameublissement (5).

3. La section fonctionnelle en accord avec la revendication 1 ou 2, **caractérisée en ce que** sur le bloc commun (8) des disques de fendage et d'arrachage (3), des racloirs de nettoyage (25) associés à chaque disque de fendage et d'arrachage (3) sont montés de manière coulissante.

4. La section fonctionnelle en accord avec l'une des revendications de 1 à 3, **caractérisée en ce que** les bords avant des disques de fendage et d'arrachage (3) ou des disques de raffermissement de culture (7) sont décalés l'un par rapport à l'autre sur une ligne droite parallèle à la direction du mouvement de la section fonctionnelle (1).

5. La section fonctionnelle en accord avec l'une des revendications de 1 à 4, **caractérisée en ce que** l'amortisseur (9) fixant le bloc commun (8) des disques de fendage et de déchirement (3) a une tige (10) avec des trous traversants (13) et un ressort hélicoïdal (11) monté sur celle-ci, le ressort hélicoïdal repose sur un collier de retenue inférieur (12B) doté d'un trou traversant, et une goupille de sécurité (14) dotée d'un trou pour une goupille de verrouillage passe à travers les trous (13) de la tige (10) de l'amortisseur (9) et du collier de retenue inférieur (12B).

6. La section fonctionnelle en accord avec l'une des revendications de 1 à 5, **caractérisée en ce qu'**un support (19) avec un distributeur d'engrais (20) est connecté au support (16) de la dent d'ameublissement.

7. La section fonctionnelle en accord avec l'une des revendications de 1 à 6, **en ce que** les racleurs de nettoyage (26) sont attachés aux disques de fendage et de déchirement (3) et au soc de disque (4).

8. La section fonctionnelle en accord avec l'une des revendications 1 à 7, **caractérisée en ce que** le cadre de support (2) comprend un support de renforcement (27).
